# EUROPÄISCHE PATENTSCHRIFT

(11) **EP 1 777 983 B1**
(45) Veröffentlichungstag und Bekanntmachung des Hinweises auf die Patenterteilung: **13.02.2013**
(21) Anmeldenummer: 06019021.2
(22) Anmeldetag: 12.09.2006
(51) Int. Cl.: H04Q 11/04, H04L 12/28

(54) **Verfahren zur Verbesserung der Übertragung von zeitkritischen IP-Anwendungen**
Method for improving transmission of time critical IP applications
Méthode pour améliorer la transmission d'applications IP à durée critique

(30) Priorität: 19.10.2005 DE 102005050725
(43) Veröffentlichungstag der Anmeldung: 25.04.2007
(73) Patentinhaber: Deutsche Telekom AG, 53113 Bonn (DE)
(72) Erfinder: Wenz, Heinrich, 13349 Berlin (DE)

(56) Entgegenhaltungen:
- WO-A-2006/041663
- US-A- 5 889 856
- US-A1- 2002 150 082
- US-A1- 2003 112 966

## Beschreibung

Die Erfindung bezieht sich auf das Gebiet der xDSL- Technologie und ist auf die bessere Auslastung von Verbindungen zwischen DSL- Teilnehmern und Diensteanbietern für die Übertragung von zeitkritischen IP- Anwendungen ausgerichtet.
Herkömmliche Telefonnetze (PSTN/ISDN) arbeiten weltweit auf den Kupfer-Anschlussleitungen im niederen Frequenzband (mit Ausnahme von Glasfaserzuführungssystemen).
Beim klassischen ISDN-Basisanschluss wird ein Zweidraht-Datenverbindung ausschließlich für den ISDN-Dienst verwendet.
Aufgrund der zunehmenden Datenanforderungen werden zunehmend schnellere Verbindungen mit hohem Datendurchsatz von den Telekommunikationsbetreibern gefordert. Das geschieht insbesondere durch die DSL- Technologie (Digital Subscriber Line- Technologie). Bei dieser Technologie werden zwei Umsetzer benötigt, wobei ein Umsetzer der Vermittlungsstelle und ein Umsetzer dem Teilnehmer zugeordnet ist. Die DSL-Technik nutzt den Sachverhalt, dass der herkömmliche analoge Telefonverkehr im Kupferkabel nur Frequenzen bis 4kHz belegt. Theoretisch können jedoch auf Kupferleitungen Frequenzen bis 1,1MHz und höher erreicht werden. Durch Aufsplitten der Bandbreite in unterschiedliche Kanäle, beispielsweise in Kanäle für Sprache und Kanäle für Dateninformationen, und die Nutzung von höheren Frequenzbereichen sind, abhängig von der jeweils eingesetzten DSL- Variante (xDSL), höhere Übertragungsraten möglich.
Ein Merkmal dieser Lösungen beruht darauf , dass die entsprechend einer xDSL Variante aufgesplitteten und mit unterschiedlichen Anwendungen belegten Frequenzbereiche gleichzeitig auf einem bestehenden Telefonanschluss oder ISDN-Basisanschluss über nur eine Kupfer- Zweidrahtleitung (Cu- Zweidrahtleitung) betrieben werden können. Für die Trennung des Schmalbandsignals (Telefon) vom Breitbandsignal/ DSL-Signal (Internet) wird ein Splitter verwendet.
Das Frequenzband, in welchem ISDN basierte Sprachsignale oder analoge Sprachsignale des PSTN übertragen werden, reicht je nach Modulationsmethode bis zu 120 kHz. Dabei werden xDSL- Anwendungen immer über dem Frequenzband der herkömmlichen Telefonanschlussnetze betrieben.
Über xDSL-Anwendungen werden in der Regel IP-Verbindungen transportiert. Diese breitbandigen IP-Verbindungen unterscheiden nach dem heutigen Stand der Technik nicht zwischen qualitätskritischen oder nicht qualitätskritischen Anwendungen.
Bei Verwendung von einfachen analogen Anschlüssen, die in einem Frequenzbereich von 0,3-3,4 kHz betrieben werden, ist der Frequenzbereich ab 20 kHz für xDSL- Anwendungen nutzbar.
Ein solches System ist z.B. offenbart im Dokument US 5 889 856 A.
Bei ISDN in Verbindung mit dem Leitungscode 2B1Q ist der Frequenzbereich ab 80 kHz und bei ISDN in Verbindung mit dem Leitungscode 4B3T ist der Frequenzbereich ab 120 kHz für xDSL- Anwendungen nutzbar. Leitungscodes sind darauf ausgerichtet, digitale Signale so zu verändern, dass sie für die Übertragung auf langen Leitungen geeignet sind.
Bei den bekannten Lösungen laufen gegenwärtig VoIP- Anwendungen über xDSL, im höheren Frequenzbereich ab etwa 25 kHz. Der niedere Frequenzbereich der Kupferdoppelader bleibt für POTS-Anwendungen (Plain Old Telephone System) reserviert.
Der für xDSL-Technologie reservierte Frequenzbereich, der im günstigsten Fall bei 20 kHz beginnt, ist jedoch sehr reichweitenkritisch, da hier die physikalische Dämpfung der Cu-Doppelader ungünstiger als im niederfrequenten Bereich ist.

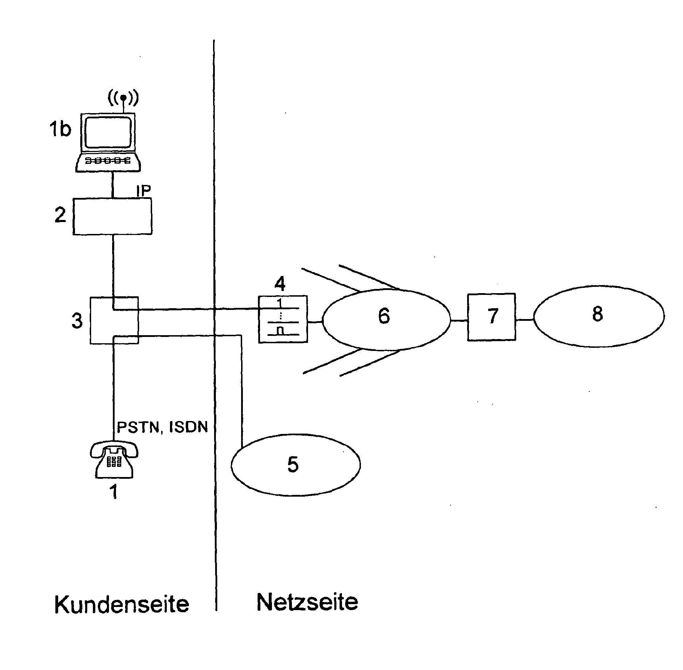

Mit Asymmetric Digital Subscriber Line (ADSL) wird die in Deutschland zur Zeit häufigste Anschlusstechnik (Fig. 1) bezeichnet. Asymmetric bedeutet, dass die zur Verfügung stehende Datenraten in Sende- und Empfangsrichtung unterschiedlich sind, und zwar in Empfangsrichtung des Kunden erheblich größer als in Senderichtung. Die bisher installierte ADSL- Gerätetechnik benutzt für DSL-Anwendungen nur Frequenzbereiche, die oberhalb des für den ISDN-Basisanschluss verwendeten Frequenzbereich von 130 kHz liegen. Dadurch können alle ISDN-Dienste sowie auch analogen Dienste vom Telnehmer zur selben Zeit wie der Internet- Anschluss benutzt werden. Beide Dienste können parallel übertragen werden.

Gemäß bekanntem Stand der Technik (Fig.1) werden durch einen beim Kunden angeordneten Frequenz- Splitter 3 das niedere und das hohe Frequenzband (ISDN/PSTN-Frequenzband und ADSL-Frequenzband) getrennt. Dabei wird über das ISDN/PSTN- Frequenzband ein analoger Anschluss (PSTN- Anschluß) oder ein ISDN- Anschluss (Kunden-Endgerät 1) betrieben. Beiden Anschlussarten ist gemeinsam, dass sie in Form von Einzelanschlüssen direkt an der Vermittlungsstelle betrieben werden und dem Kunden jeweils ein exklusiver Fernsprechkanal zur Verfügung steht. Der obere Frequenzbereich für ADSL- Anwendung wird auf der Kundenseite über ein DSL-Modem 2 betrieben, welches auf der Netzseite (Vermittlungsstelle) mit einem DSLAM 4 (Digital Subscriber Line Access Multiplexer) verbunden ist. Ein, DSLAM 4, ermöglicht eine skalierbare und damit wirtschaftliche Anbindung von Breitbanddiensten über das bestehende Telefonnetz (Schmalband). Durch den Einsatz der DSLAM- Technologie ist ein Kommunikationsanbieter in der Lage, seinen Teilnehmern Hochgeschwindigkeits-Breitband-Datenverbindungen zum Internet bei gleichzeitiger Nutzung der traditionellen Telefondienste ohne Einschränkung anbieten zu können. Ein DSLAM 4 hat die Aufgabe, mehrere ADSL-Kunden 1-n an einer Modembank zu konzentrieren um die Gesamtbandbreite zu teilen. Die IP basierten Daten des DSLAMs 4 werden über ein Konzentratornetz 6 und einen nachgeordneten Breitband IP-Access Router 7 zum IP-Accessnetz 8 geführt. Das Konzentratornetz 6 konzentriert dabei die Datenströme mehrerer Kunden 1-n des DSLAMs 4. Kunden eines ADSL-Anschlusses, DSL-Kunden-Endgerät 1b, teilen sich damit bis zum IPgemeinsam die vorhandene Gesamtbandbreite. ISDN-/PSTN Kunden werden bis an die Vermittlungsstelle exklusiv an einen Port der Vermittlungsstelle angebunden und teilen sich bis dorthin nicht eine gemeinsam genutzte Bandbreite.

Der oben beschriebenen Stand der Technik beruht darauf, dass der IP-Datenverkehr von ADSL-Kunden immer in einem gemeinsam genutzten Medium "shared Medium" geführt wird, wobei sich mehrere Kunden die vorhandene IP-Accessbandbreite teilen müssen. Das hat jedoch den Nachteil, dass bei zeitkritischen IP-Anwendungen, wie z.B. VoIP- (Voice over IP) oder Streaming Media- (Video on Demand) u. a. den Kunden keine garantierte IP-Accessbandbreite für Ihre Anwendungen zur Verfügung gestellt werden kann. Die den Kunden zur Verfügung stehende IP Acessbandbreite richtet sich also immer nach dem jeweiligen Verkehrsaufkommen im Accessnetz.

Aufgabe der Erfindung ist es eine Lösung für zeitkritische IP-Verkehre zu entwickeln, die sich durch die Bereitstellung einer garantierten Access-Bandbreite auszeichnet, wobei die Möglichkeit bestehen soll, dass der IP-Acesspunkt wesentlich weiter von der Kundenlokation entfernt eingerichtet werden kann als es bei herkömmliche xDSL Anwendungen mit DSLAM möglich ist.

Die Erfindung macht sich zu nutze, dass im niederen Frequenzband (Telefon) aufgrund der physikalischen Gegebenheiten (günstigere Dämpfungswerte) wesentlich größere Reichweiten zwischen Teilnehmer und Carrierequipment zu erreichen sind, als im höheren Frequenzband, in welchem xDSL Anwendungen realisiert werden.
Die Erfindung basiert darauf, den unteren Frequenzbereich, der im Rahmen der xDSL- Technologie gemäß Stand der Technik für PSTN/ISDN Anwendungen genutzt wird, ausschließlich für hochqualitative und zeitkritische IP-Anwendungen, wie beispielsweise VoIP (Voice over Internet Protocoll), Video- Streaming, Video on Demand , Internet Radio oder Internet TV zu nutzen. Damit wird gewährleistet, das dem Kunden insbesondere Fernsprechdienste, auch weiterhin mit einer hohen Qualität exklusiv auf der Access-Leitung zur Verfügung stehen und nicht mit anderen Datenverkehren in Konkurrenz treten.
Der Kunde teilt sich in diesem Fall nicht wie zuvor in der xDSL-Technologie beschrieben, die Bandbreite des Accessnetzes mit weiteren Kunden, sondern nutzt diese exklusiv für zeitkritische IP-Anwendungen.

Diese Verfahrensweise bietet eine Vielzahl von Vorteilen. Durch die exklusive Leitungsführung zwischen Vermittlungsstelle und Teilnehmer im Ortsbereich, die bei der xDSL-Technologie bisher nicht vorhanden ist, kann bei Anwendung der Erfindung jedem Kunden zu jeder Zeit eine konstante Bandbreite zur Verfügung gestellt werden. Dies ist insbesondere für eine reibungslose Abwicklung von Dowload-Prozessen bei zeitkritischen IP- Anwendungen von entscheidendem Vorteil. Im Unterschied dazu werden bei xDSL Anwendungen, mehrere Teilnehmer über eine Leitung geführt, welche sich die nutzbare Gesamtbandbreite des IP-Accessnetzes teilen müssen. Dabei wird es insbesondere dann, wenn eine Vielzahl von Nutzern gleichzeitig auf die Anwendungen zugreifen, zu Engpässen, insbesondere bei Download Prozessen, kommen. Auch die Anwendung der ADSL-Technologie, die darauf beruht für Download-Prozesse einen höhere Datenrate bereitzustellen, kann die aus einer hohen Auslastung des Netzes resultierenden Engpässe nicht ausgleichen.

Die Erfindung wird anhand eines Ausführungsbeispiels näher erläutert.

Fig. 1 zeigt ein Blockschaltbild nach dem bekannten Stand der Technik für eine ADSL- Anwendung.

In Fig.2 ist eine erste mögliche Ausführungsform der Erfindung dargestellt.

Fig. 3 zeigt eine weitere möglich Ausführungsform der Erfindung.

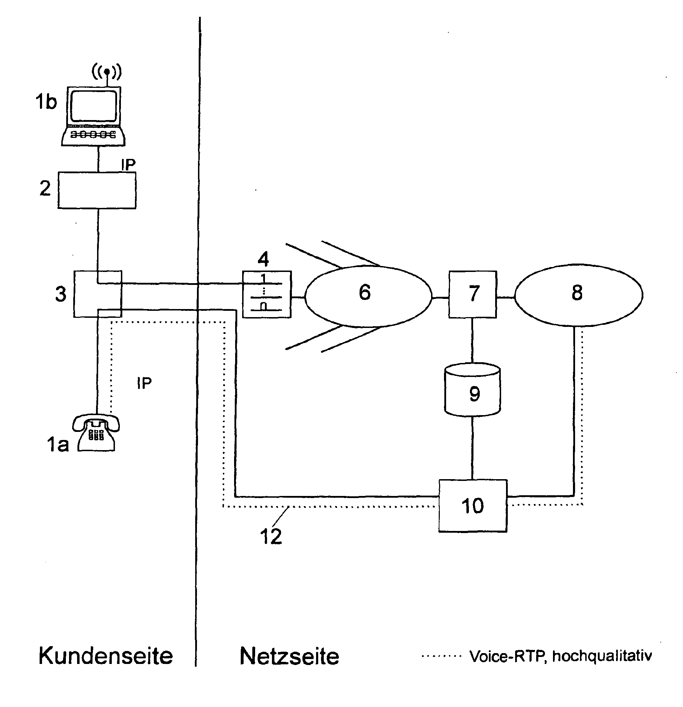

Bei Wegfall des PSTN/ISDN-Verkehrs im unteren Frequenzbereich (z.B. durch Entbündelung etc. (Fig. 2) wird dieser Frequenzbereich erfindungsgemäß für hochqualitativen und zeitkritischen IP-Verkehr genutzt. Da die Leitungsführung vom VoIP- Engerät 1a über eine exklusive VoIP-Verbindung 12 kundenselektiv ohne ein Konzentratornetz für VoIP oder Streaming- Dienste benutzt wird, kann dem Kunden eine garantierte Access-Bandbreite zum nächstgelegenen IP-Accesspunkt des Carriers zur Verfügung gestellt werden.

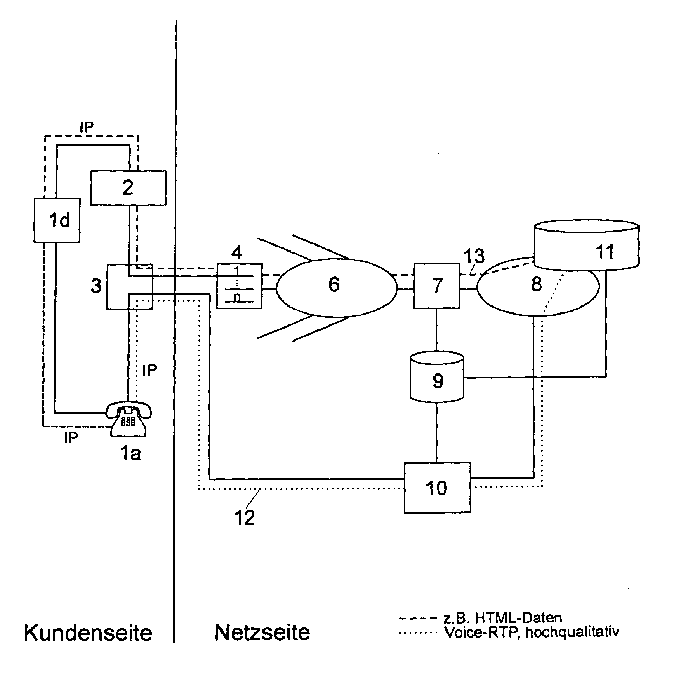

Dieser IP-Accesspunkt kann aufgrund der wesentlich niedrigeren Dämpfungswerte des unteren Frequenzbereiches der Kupfer-Doppelader auch weiter von der Kundenlokation entfernt sein als ein DSLAM 4.
Die exklusive VoIP-Verbindung 12 zwischen Kunden und IP-Accespunkt wird bei dieser Lösung permanent aufrechterhalten und nicht durch eine Zwangstrennung des Telekommunikationsanbieters getrennt.
Über die erfindungsgemäße VoIP-Verbindung 12 sollen lediglich zeitkritische IP-Verkehre (z.B. RTP=Real Time Protokoll), wie VoIP, übertragen werden.
Kunden, welche lediglich über VoIP telefonieren möchten und keine weiteren Anwendungen nutzen möchten, reicht diese exklusive für Sprachverkehr optimierte IP-Accessverbindung zur Übertragung von Sprachsignalen aus.
Andere Verkehre sollen über die ADSL-Accesstechnologie, wie im Stand der Technik (Fig.1) beschrieben, übertragen werden.
Um eine Verzahnung der über die bandbreitengarantierte, exklusive Verbindung des Kunden stattfindenden RTP-Ströme mit zusätzlicher Anwendungen zu realisieren, sind die IP-Ströme durch geeignete Applikationsserver der Diensteanbieter wieder in Korrelation zu setzen, welches durch herkömmliche IP-übliche Identifizierungsmechanismen (Radius-Login, LDAP-Verzeichnisse und Single Sign ON etc.) garantiert werden kann.
Werden z.B. für eine multimediale Sprachverbindung HTML-Seiten und VoIP-Ströme (RTP) wie oben beschrieben zusammengebracht, so muss das Endgerät des Kunden sowohl eine exklusive bandbreitengarantierte Verbindung zu einem IP-Accesspunkt für die VoIP-Ströme (RTP) des IP-Carriers generieren können als auch gleichzeitig über ein ADSL-Modem oder eine Verbindung eines modemintegrierten Endgerätes des Kunden eine IP- Verbindung über das im Stand der Technik beschriebene Konzentratornetz des IP-Accessnetzes für die HTML-Inhalte machen können. (Fig. 3)
Im Unterschied zu Fig. 2 werden hierbei die über zwei Wege kommenden IP-Verbindungen auf einem Applikationsserver 11 zusammengeführt. Der Applikationsserver 11 hat die Aufgabe in Kundenrichtung die RTP-Ströme über das niedrige Frequenzband, und die zeitkritischen IP-Ströme über die herkömmliche Accesstechnik zu transportieren.

Sprachsignale werden dann über die exklusive Modemverbindung und die HTML-Inhalte werden über die ADSL-Verbindung übertragen (Fig.3).

Für die IP-Sprachverbindung entstehen somit keine Beeinträchtigungen durch Bandbreitenschwankungen innerhalb des ADSL-Accessnetzes während die HTML-Inhalte (zeitunkritisch) den Bandbreitenschwankungen unterliegen können. Entsprechend Fig.3 wird im unteren für den herkömmlichen Sprachverkehr bestimmten Frequenzbereich über einen Splitter 3 ein VoIP-Endgerät 1a angeschaltet, dass über eine exklusive VoIP-Verbindung 12 mit einer exklusiven Access-Modembank 10 verbunden ist. Die exklusive VoIP-IP-Verbindung zwischen dem VoIP-Endgerät 1a und der exklusiven IP-Access Modembank 10 ist dabei als Festverbindung konfiguriert. Über die IP-Access Modembank 10 wird jedem Kunden exklusiv während einer Verbindung ein Modem zugeordnet. Weiterhin ist die exklusive IP-Access Modembank 10 über eine Kunden-Datenbank 9, welche die Authentifizierung des jeweiligen Kunden übernimmt, mit einem Breitband IP-Access-Router 7 verbunden. Der Applikationsserver 11, der mit der Kunden-Datenbank 9 verbunden ist, hat über das IP-Access Netz 8 Zugriff zum IP-Access-Router 7 und zur exklusiven IP-Access Modembank 10, so dass er in der Lage ist, in Kundenrichtung die RTP-Ströme über das niedrige Frequenzband und die zeitunkritischen IP-Ströme über die herkömmliche Accesstechnik zu transportieren. Eine Zweckmäßige Ausgestaltung der Lösung besteht darin, das vorgeschaltete Modem in das VoIP-Kunden-Endgerät 1a zu integrieren.

### Bezugszeichenaufstellung

- 1: Kunden-Endgerät (analog über PSTN oder digital über ISDN)
- 1a: VoIP-Kunden-Endgerät
- 1b: DSL-Kunden-Endgerät
- 1d: DSL-Kunden-Endgerät mit Router
- 2: DSL-Modem
- 3: Frequenz-Splitter
- 4: DSLAM
- 5: PSTN/ISTN
- 6: Konzentrator-Netz
- 7: Breitband IP-Access-Router
- 8: IP-Access-Netz
- 9: Kunden-Datenbank
- 10: Exklusive IP-Access-Modembank
- 11: Applikations-Server
- 12: Exklusive VoIP-Verbindung

## Patentansprüche

1. Verfahren zur Verbesserung der Übertragung von zeitkritischen IP-Anwendungen unter Anwendung der xDSL- Technik,
**dadurch gekennzeichnet,**
**dass** bei Beibehaltung der xDSL Technologie für x-DSL- Anwendungen im oberen Frequenzbereich dem Kunden im unteren, durch einen Splitter (3) separierten Frequenzbereich, eine exklusive VoIP-Verbindung (12) in Verbindung mit einem VolP-Kunden-Endgerät (1a) für den Zugriff auf hochqualitative und zeitkritische IP-Anwendungen, wie VoIP oder Internet-Radio bereitgestellt wird.

2. Verfahren nach Anspruch 1, **dadurch gekennzeichnet, dass** die über die exklusive VoIP-Verbindung (12) geführten VoIP-Datenströme und die über die herkömmliche nicht exklusive IP-Verbindung geführten IP-Datenströme über einen auf der Netzseite angeordneten Applikationsserver (11) zusammengeführt und mit mindestens einer Applikation verbunden werden.

3. Verfahren nach Anspruch 1, **dadurch gekennzeichnet, dass** die über die exklusive VoIP-Verbindung (12) geführten VoIP-Datenströme und die über die herkömmliche, nicht exklusive IP-Verbindung geführten IP-Datenströme auf dem auf der Kundenseite angeordneten VoIP-Kunden-Endgerät (1a) zusammengeführt und für den Kunden dargestellt werden.

4. Anordnung zur Verbesserung der Übertragung von zeitkritischen IP-Anwendungen unter Nutzung der xDSL-Technik,
**dadurch gekennzeichnet,**
**dass** dem Kunden eines xDSL-Anschlusses im unteren, für den herkömmlichen Sprachverkehr bestimmten Frequenzbereich, über einen Frequenz-Splitter (3) ein VoIP-Kunden-Endgerät (1a) zugeordnet ist, dass über eine exklusive VoIP-Verbindung (12) mit einer exklusiven IP-Access-Modembank (10) verbunden ist, über die jedem Kunden exklusiv ein Modem zugeordnet wird, dass die exklusive IP-Access-Modembank (10) über eine Kunden-Datenbank (9), welche die Authentifizierung des jeweiligen Kunden übernimmt, mit einem BreitbandIP-Access-Router (7) verbunden ist, und dass über einen Applikationsserver (11), der mit der Kunden-Datenbank (9) verbunden ist, über das IP-Access-Netz (8) eine Verbindung zum Breitband IP-Access-Router (7) und zur exklusiven IP-Access-Modembank (10) besteht.

5. Anordnung nach Anspruch 4, **dadurch gekennzeichnet, dass** die exklusive IP-Verbindung zwischen dem VoIP-Kunden-Endgerät (1a) und der exklusiven IP-Access-Modembank (10) als Festverbindung konfiguriert ist.

6. Anordnung nach Anspruch 4, **dadurch gekennzeichnet, dass** das vorgeschaltete Modem in das VoIP- Endgerät (1a) integriert ist.

7. Anordnung nach Anspruch 4, **dadurch gekennzeichnet, dass** das VoIP-Kunden-Endgerät (1a) als Computer ausgebildet ist, der in der Lage ist, RTP-Ströme zu verarbeiten.

## Claims

1. A method for improving the transmission of time-critical IP applications by using the xDSL technology,
**characterised in that** while maintaining the xDSL technology for xDSL applications in the upper frequency range, the customer is provided, in the lower frequency range separated by a splitter (3), with an exclusive VoIP connection (12) together with a VoIP client terminal (1a) for the access to high-quality and time-critical IP applications.

2. The method according to claim 1, **characterised in that** the VoIP data streams directed over the exclusive VoIP connection (12) and the IP data streams directed over the conventional, non-exclusive IP connection are integrated and linked to at least one application via an application server (11) arranged on the network side.

3. The method according to claim 1, **characterised in that** the VoIP data streams directed over the exclusive VoIP connection (12) and the IP data streams directed over the conventional, non-exclusive IP connection are integrated in the VoIP client terminal (1a) arranged on the client side and displayed for the client.

4. Arrangement for improving the transmission of time-critical IP applications by using the xDSL technology,
**characterised in that** the client of an xDSL connection is assigned a VoIP client terminal (1a) via a frequency splitter (3) in the lower frequency range used for the conventional speech traffic, that it is connected via an exclusive VoIP connection (12) to an exclusive IP access modem bank (10), by means of which each client is exclusively assigned one modem, that the exclusive IP access modem bank (10) is connected to a wideband IP access router (7) via a client database (9) that provides authentication of the respective client, and that there is a connection to the wideband IP access router (7) and the exclusive IP access modem bank (10) via an application server (11) connected to the client database (9), via the IP access network (8).

5. Arrangement according to claim 4, **characterised in that** the exclusive IP connection between the VoIP client terminal (1a) and the exclusive IP access modem bank (10) is configured as a fixed-line connection.

6. Arrangement according to claim 4, **characterised in that** the upstream modem is integrated into the VoIP terminal (1a).

7. Arrangement according to claim 4, **characterised in that** the VoIP client terminal (1a) is configured as a computer adapted to process RTP streams.

## Revendications

1. Procédé d'amélioration de la transmission d'applications IP critiques en termes de temps en utilisant la technologie xDSL,
**caractérisé en ce que**, tout en conservant la technologie xDSL pour les applications xDSL dans la gamme de fréquence supérieure, on fournit au client, dans la gamme de fréquence inférieure, séparée par un séparateur (3), une connexion VoIP (12) exclusive associée à un terminal client VoIP (1a) pour accéder à des applications de haute qualité et critiques en termes de temps, telles que VoIP ou radio sur internet.

2. Procédé selon la revendication 1, **caractérisé en ce que** les flux de données VoIP passant par la connexion VoIP (12) exclusive et les flux de données IP passant par la connexion IP classique non exclusive sont regroupés et connectés à au moins une application par l'intermédiaire d'un serveur d'application (11) disposé côté réseau.

3. Procédé selon la revendication 1, **caractérisé en ce que** les flux de données VoIP passant par la connexion VoIP (12) exclusive et les flux de données IP passant par la connexion IP classique non exclusive sont regroupés au niveau du terminal client VoIP (1a) côté client et visualisés pour le client.

4. Dispositif pour améliorer la transmission d'applications IP critiques en termes de temps en utilisant la technologie xDSL,
**caractérisé en ce qu'**un terminal client VoIP (1a) est affecté au client d'une connexion xDSL dans la gamme de fréquence inférieure destinée à la communication vocale classique, par l'intermédiaire d'un séparateur de fréquence, **en ce qu'**il est relié, via une connexion VoIP exclusive (12), à une base de modem d'accès IP (10) exclusive, par l'intermédiaire de laquelle un modem est affecté à chaque client de manière exclusive, **en ce que** la base de modem d'accès IP (10) exclusive est connectée à un routeur à large bande d'accès IP (7) par l'intermédiaire d'une base de données client (9) qui assure l'authentification du client respectif, et **en ce qu'**une connexion passant par l'intermédiaire d'un serveur d'application (11) connecté à la base de données client (9) existe vers le routeur à large bande d'accès IP (7) et vers la base de modem d'accès IP (10) exclusive via le réseau d'accès IP (8).

5. Dispositif selon la revendication 4, **caractérisé en ce que** la connexion IP exclusive entre le terminal client VoIP (1a) et la base de modem d'accès IP (10) exclusive est configurée comme une connexion fixe.

6. Dispositif selon la revendication 4, **caractérisé en ce que** le modem disposé en amont est intégré au terminal VoIP (1a).

7. Dispositif selon la revendication 4, **caractérisé en ce que** le terminal client VoIP (1a) est conçu comme un ordinateur capable de gérer des flux RTP.
